# EUROPÄISCHE PATENTSCHRIFT

(11) **EP 2 213 885 B1**
(45) Veröffentlichungstag und Bekanntmachung des Hinweises auf die Patenterteilung: **05.03.2014**
(21) Anmeldenummer: 10000514.9
(22) Anmeldetag: 20.01.2010
(51) Int. Cl.: F16B 2/24, F16M 11/26, F16M 11/28, F16M 11/32

(54) **Teleskopierbare Stützvorrichtung mit Klemmeinrichtung**
Extendible support device with clamp device
Dispositif de support télescopable doté d'un dispositif de serrage

(30) Priorität: 30.01.2009 DE 102009006789
(43) Veröffentlichungstag der Anmeldung: 04.08.2010
(73) Patentinhaber: CULLMANN GERMANY GmbH, 90579 Langenzenn (DE)
(72) Erfinder: Cullmann, Wolfgang, 90579 Langenzenn (DE)
(74) Vertreter: Zinsinger, Norbert

(56) Entgegenhaltungen:
- WO-A1-00/74609
- WO-A1-03/010439
- WO-A1-2007/074493
- DE-A1- 19 737 368
- US-A- 2 536 253

## Beschreibung

Die Erfindung betrifft eine teleskopierbare Stützvorrichtung, beispielsweise ein Stativ für Photoapparate und/oder Filmkameras, umfassend mindestens ein teleskopierbar miteinander verbundenes aus Außen- und Innenrohr bestehendes Stützbein mit einer Klemmeinrichtung, wobei die Klemmeinrichtung in einer Sperrrichtung eine Relativverschiebung zwischen Innen- und Außenrohr blockiert.

Herkömmlicherweise werden aus Außen- und Innenrohr bestehende Stützbeine mit einer Klemmeinrichtung fixiert, welche sich entweder in der Klemmstellung oder in der Freigabestellung befindet. Die hierbei häufig verwendeten Schiebeelemente sind wenig anwenderfreundlich, da sie bei großen Stellwegen schlecht handhabbar sind und bei kleinen Stellwegen das Risiko eines unbeabsichtigten Entriegelns bergen. Im Hinblick beispielsweise auf die Verwendung von Stützbeinen bei Stativen im Photo- und Filmbereich, wo sehr teure Photoapparate und/oder Filmkameras eingesetzt werden, ist es daher wünschenswert, Stützvorrichtungen bereitzustellen, die leicht handhabbar sind und bei denen die Stützbeine gegen ein unbeabsichtigtes Zusammenschieben gesichert sind.

Die WO 03/010439 A1 beschreibt eine Vorrichtung zum Verriegeln von einem ersten und einem zweiten Teleskopelement, die Klemmringe aufweisen, die das zweite Teleskopelement umgreifen und es klemmen, indem sie in einer Sperrstellung durch Federelemente schräg gestellt werden. Die Sperrstellung kann durch ein axial bewegbares Betätigungselement aufgehoben werden, das die Klemmringe gerade stellt.

Die WO 2007/074493 A1 beschreibt eine Vorrichtung zum Verriegeln von einem ersten und einem zweiten Teleskopelement, das einen Klemmring aufweist, der einstückig mit einer Taste verbunden ist, so dass er von einer schrägen Sperrstellung in eine gerade Freigabestellung verstellbar ist.

Aufgabe der vorliegenden Erfindung ist es somit, eine Stützvorrichtung bereit zu stellen, welche leicht handhabbar ist und vorzugsweise die oben erwähnten Anforderungen erfüllt.

Diese Aufgabe wird durch eine Stützvorrichtung gelöst, umfassend mindestens ein teleskopierbar miteinander verbundenes, aus Außen- und Innenrohr bestehendes Stützbein mit einer Klemmeinrichtung, wobei die Klemmeinrichtung in einer Sperrrichtung eine Relativverschiebung zwischen Innenrohr und Außenrohr blockiert und in einer Freigaberichtung eine Relativverschiebung zwischen Innenrohr und Außenrohr ermöglicht, wobei die Klemmeinrichtung eine am einen Ende des Außenrohrs, an dem das Innenrohr in das Außenrohr einschiebbar ist, befestigte Muffe umfasst, durch die sich im montierten Zustand das Innenrohr axial verschieblich hindurcherstreckt, wobei die Muffe einen von außen her betätigbaren Klemmring aufweist, wobei der Klemmring innerhalb eines in der Muffe ausgebildeten Querspaltes um eine sich quer zur Muffenlängsachse erstreckende Achse kippbar gehalten ist, und zwar zwischen einer sich senkrecht zur Muffenlängsachse erstreckenden Freigabelage, in welcher Innen- und Außenrohr in axialer Richtung relativ zueinander axial verschiebbar sind, und einer schrägen Klemmlage, in welcher Innen- und Außenrohr in Sperrrichtung relativ zueinander blockiert sind, wobei der Klemmring durch ein erstes Rückstellelement in die Klemmlage gebracht ist, wobei durch eine an der Muffe beweglich befestigte Taste, die zu einer sich quer zur Muffenlängsachse erstreckende Achse kippbar gelagert ist, durch Drücken der Taste der Klemmring von der Klemmlage in die Freigabelage bringbar ist, in welcher das Innenrohr auch in der Sperrrichtung gegen das Außenrohr axial verschiebbar ist.

Bei der erfindungsgemäßen Stützvorrichtung umfasst die Klemmeinrichtung erfindungsgemäß eine parallel zur Tastenachse kippbar gelagerte Wippe mit zwei Schenkeln und einem Lagerpunkt, wobei die an der Muffe befestigte bewegliche Taste, die zu der sich quer zur Muffenlängsachse erstreckende Achse kippbar gelagert ist, so angeordnet ist, dass beim Drücken der Taste die Taste auf den ersten Schenkel der kippbar gelagerte Wippe wirkt und mit dem zweiten Schenkel auf den Klemmring wirkt, wodurch der Klemmring von der Klemmlage in die Freigabelage bringbar ist. Durch die Verwendung einer Wippe als Kraft-übertragendes Element wird vorteilhaft weiter der Stellweg zwischen Freigabelage und Klemmlage vergrößert, wodurch eine gegen ein versehentliches Zusammenschieben gesicherte Stützvorrichtung erlangt wird.

Unter Sperrrichtung ist die Richtung des Zusammenschiebens teleskopierbar miteinander verbundener Außen- und Innenrohre zu verstehen. Unter Freigaberichtung ist die Richtung des Auseinanderziehens der teleskopierbar miteinander verbundenen Außen- und Innenrohre zu verstehen. Die Stützvorrichtung weist somit eine Klemmvorrichtung auf, die vorzugsweise als Reibrichtgesperre ausgebildet ist.

Im Unterschied zu den herkömmlich häufig verwendeten Schiebern ist die Klemmeinrichtung mit einer Taste in Kombination mit einem Klemmring wesentlich einfacher zu bedienen, da auch bei einem größeren Stellweg die Taste sehr leicht gehandhabt werden kann. Aufgrund des größeren Stellweges kommt es auch bei der Abnutzung des Klemmringes zu keinem versehentlichem Entriegeln zu der Freigabestellung.

Bei einer Ausführungsform weist die Wippe des Klemmelements der erfindungsgemäßen Stützvorrichtung eine kippbar gelagerte Wippe auf, wobei die beiden Schenkel der kippbar gelagerten Wippe ein Längenverhältnis von 3:1 bis 1:1 aufweisen, wobei der längere Schenkel der erste Schenkel der Wippe ist. Vorzugsweise schließen die beiden Schenkel der Wippe einen Winkel von 100 bis 170 ° ein. Durch die unterschiedlich langen Schenkel wird ein vergrößertes Kraftmoment auf den Sperrring übertragen.

Bei einer nicht patentgemäßen alternativen Ausführungsform der Stützvorrichtung umfasst die Klemmeinrichtung eine an der Muffe befestigte bewegliche Taste, die zu der sich quer zur Muffenlängsachse erstreckende Achse kippbar gelagert Ist, wobei die Taste ferner eine Nase aufweist, die so ausgestaltet ist, sodass beim Drücken der Taste die Nase auf den Klemmring wirkt, wodurch der Klemmring von der Klemmlage in die Freigabelage bringbar ist.

Bei einer Ausführungsform wirkt ein zweites Rückstellelement auf die Taste, wodurch diese den Klemmring in die Klemmlage bringt. Vorzugsweise ist das erste Rückstellelement und/oder das zweite Rückstellelement eine Feder.

Bei einer Ausführungsform der erfindungsgemäßen Stützvorrichtung besteht der Klemmring aus einem Material mit geringerer Härte als das Innen- und Außenrohr. Der Klemmring kann vorzugsweise aus Aluminium oder Kunststoff bestehen. Die Kunststoffausführung kann besonders vorteilhaft sein, weil der Zeitaufwand für die Herstellung des Klemmrings besonders gering ist. Wenn der Klemmring aus Aluminium ausgeführt ist, kann eloxiertes Aluminium bevorzugt sein. Das Innen- und Außenrohr kann beispielsweise aus Edelstahl bestehen. Es ist auch möglich, den Klemmring aus Kunststoff und das Innen- und Außenrohr aus eloxiertem Aluminium herzustellen. Durch die genannten Materialpaarungen wird ein Verkratzen der Oberfläche des Innen- und/oder Außenrohrs weitgehend vermieden.

Bei einer Ausführungsform der erfindungsgemäßen Stützvorrichtung weist der Klemmring mindestens einen Klemmringfortsatz, vorzugsweise zwei Klemmringfortsätze auf, wodurch der Klemmring gegen eine Rotation um die Muffenlängsachse fixierbar ist. Vorzugsweise sind die beiden Klemmringfortsätze symmetrisch an dem Klemmring angeordnet. Bei einer Ausführungsform ist der Klemmringfortsatz so ausgestaltet, dass die Taste direkt auf einen der Klemmringfortsätze wirkt, wodurch der Klemmring von der Klemmlage in die Freigabelage bringbar ist. Bei einer anderen Ausführungsform ist der Klemmringfortsatz so ausgestaltet, dass der zweite Schenkel der Wippe direkt auf einen der Klemmringfortsätze wirkt, wodurch der Klemmring von der Klemmlage in die Freigabelage bringbar ist.

Bei einer Ausführungsform der erfindungsgemäßen Stützvorrichtung ist die Muffe auf das Ende des Außenrohrs aufgeschrumpft. Vorzugsweise ist die Muffe aus zwei Gehäuseschalen zusammengesetzt. Hierdurch wird die Montage der Klemmeinrichtung erleichtert. Vorzugsweise besteht die Muffe aus einem schlagzähem thermoplastischen Kunststoff.

Vorzugsweise umfasst die Stützvorrichtung eine Grundplatte 1g an welcher vorzugsweise drei Stützbeine 2 beweglich angeschlossen sind. Beispielsweise umfassen die Stützbeine drei ineinandergreifende Teleskopelemente (2a,b,c). Vorteilhafterweise weist das von der Grundplatte am weitesten entfernte Teleskopelement eine rutschfeste Grundfläche, beispielsweise aus Gummi, auf.

Bei einer bevorzugten Ausführungsform weisen die Stützbeine 2 einen elliptischen, rechteckigen oder trapezförmigen Querschnitt auf. Grundsätzlich ist jede Stangenform geeignet, die ein Verdrehen des Innenrohrs- gegen das Außenrohr verhindert. Besonders bevorzugt ist ein trapezförmiger Querschnitt, da hierdurch eine besonders sichere Verdrehsicherung erreicht wird.

Die erfindungsgemäße Stützvorrichtung kann in einer bevorzugten Ausführungsform als ein Stativ zur Aufnahme von Geräten, wie beispielsweise Photoapparaten, Filmkameras oder anderen optischen Geräten, ausgebildet sein. Bei den anderen optischen Geräten kann es sich beispielsweise um ein Fernrohr oder einen Theodolit handeln.

Weiter kann es sich bei der Stützvorrichtung um eine Haltevorrichtung für ein Fenster handeln, insbesondere für ein ausstellbares Klappfenster, das beispielsweise in eine Dachschräge eingebaut ist. Es ist beispielsweise auch möglich, das mindestens eine teleskopierbare Stützbein als Abstützung für den Innenausbau von Gebäuden zu nutzen, zum Beispiel als Stützbein zum vorübergehenden Abfangen einer Innenraumdecke. Zur Anpassung an unterschiedliche Verwendungen ist es lediglich erforderlich, das oder die Stützbeine in Abhängigkeit von der maximalen Traglast zu gestalten und zu dimensionieren.

Die Erfindung wird nun anhand der Zeichnungen näher erläutert.

### Es zeigen:

- Fig. 1: eine Stützvorrichtung mit Klemmeinrichtungen in perspektivischer Darstellung;
- Fig. 2a: die Klemmeinrichtung in Fig. 1 in geklemmtem Zustand;
- Fig. 2b: die Klemmeinrichtung in Fig. 1 in gelöstem Zustand;
- Fig. 3: eine Ansicht der Klemmeinrichtung längs der Schnittlinie III-III in Fig. 2a;
- Fig. 4: verschiedene Ansichten der Wippe;

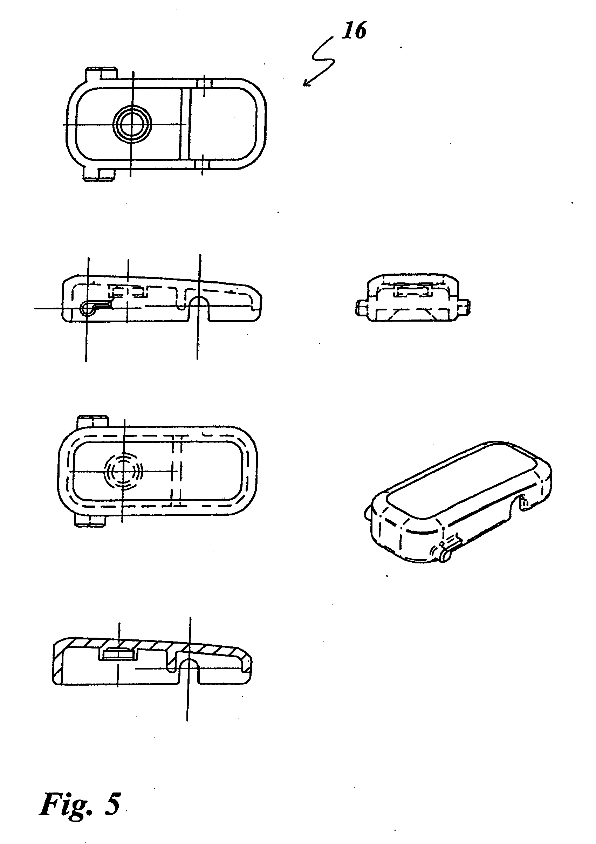

- Fig. 5: verschiedene Ansichten der Taste;
- Fig. 6: ein zweites, nicht patentgemäßes Ausführungsbeispiel der Klemmeinrichtung in Fig. 2a.

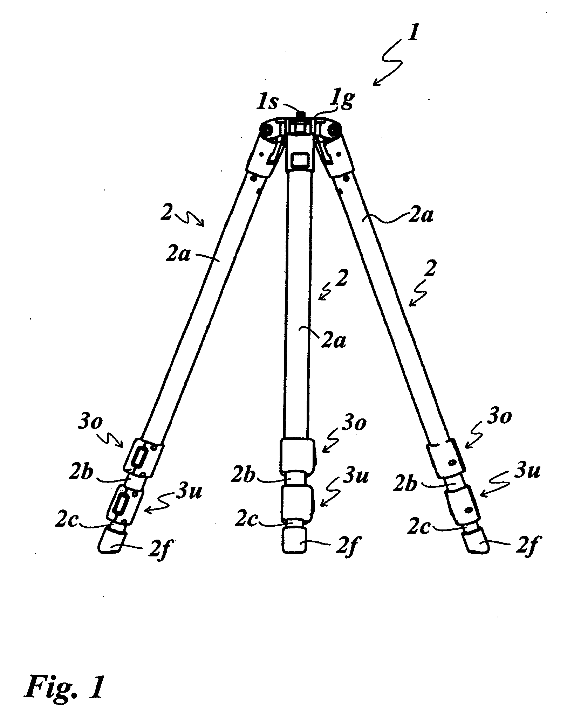

Fig. 1 zeigt eine Stützvorrichtung, die als ein Stativ 1 zum Aufspannen von optischen Geräten ausgebildet ist, beispielsweise von Photoapparaten und Filmkameras.

Das Stativ 1 weist eine Grundplatte 1g auf, die von einer drehbar gelagerten und zentrisch montierten Stativschraube 1s durchdrungen ist, wobei der Gewindeschaft der Stativschraube 1 s nach oben weist. An der Grundplatte 1g sind weiter drei als Stativbeine 2 ausgebildete Stützbeine schwenkbar angeordnet, wobei die Stativbeine 2 in der Gebrauchslage des Stativs 1 nach unten weisen.

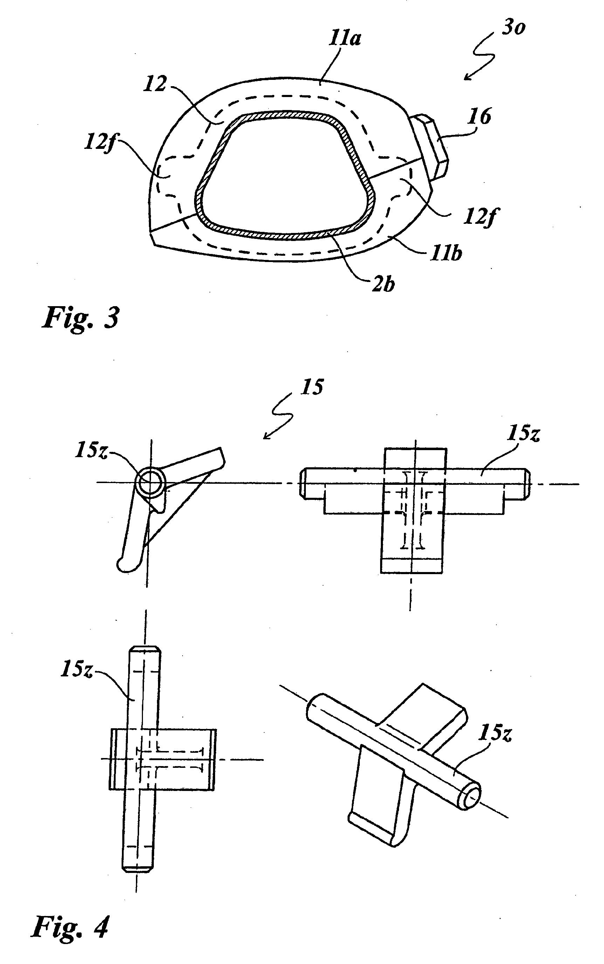

Die Stativbeine 2 weisen einen teleskopartigen Aufbau auf, wobei in dem in Fig. 1 dargestellten Ausführungsbeispiel jedes der drei Stativbeine 2 drei ineinander angeordnete rohrförmige Teleskopelemente 2a, 2b und 2c aufweist. Das Teleskopelement 2a ist von dem Teleskopelement 2b durchgriffen. Das Teleskopelement 2b ist von dem Teleskopelement 2c durchgriffen. Die Teleskopelemente 2a, 2b und 2c weisen einen trapezförmigen Querschnitt mit abgerundeten Kanten auf, wie weiter unten in Fig. 3 zu erkennen. Durch den trapezförmigen Querschnitt ist u. a. eine Verdrehsicherung ausgebildet. Das Teleskopelement 2c weist weiter an seinem unteren Endabschnitt einen Fuß 2f mit einer rutschsicheren Grundfläche auf. Vorteilhafterweise kann der Fuß 2f aus Gummi bestehen. Die Grundfläche kann mit Noppen ausgebildet sein, um die Rutschsicherheit weiter zu erhöhen.

Jeweils zwei ineinandergreifende benachbarte Teleskopelemente sind über eine muffenförmige Klemmeinrichtung miteinander verbunden, wobei die Klemmeinrichtungen an dem Stativbein 2 übereinander angeordnet sind. Eine obere Klemmeinrichtung 3o ist mit dem unteren Endabschnitt des Teleskopelements 2a drehstarr verbunden, wobei der obere Endabschnitt des Teleskopelements 2a den oberen Endabschnitt des Stativbeines 2 bildet und wie weiter oben beschrieben in der Grundplatte 1g des Stativs 1 schwenkbar gelagert ist. Eine untere Klemmeinrichtung 3u ist mit dem unteren Endabschnitt des Teleskopelements 2b drehstarr verbunden, wobei das Teleskopelement 2b die obere Klemmeinrichtung 3o und das Teleskopelement 2c die untere Klemmeinrichtung 3u axial verschiebbar durchgreift.

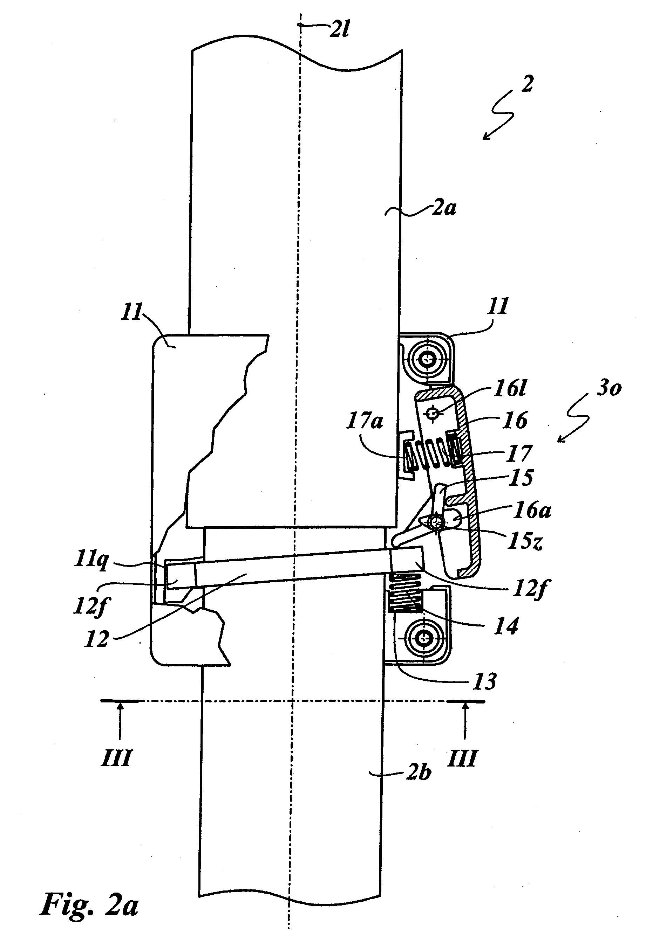

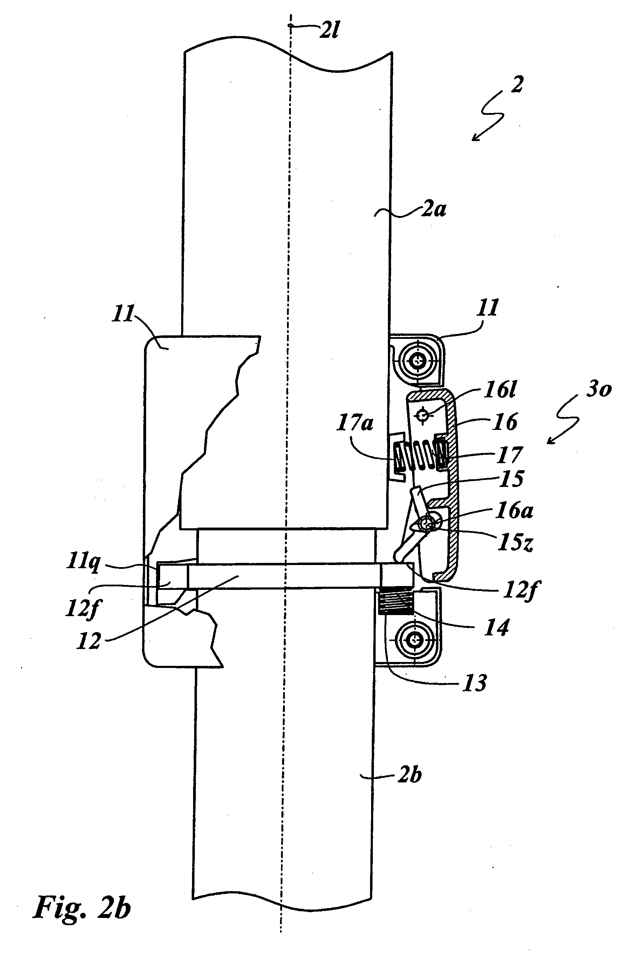

Die Fig. 2a, 2b und 3 zeigen den Aufbau und die Wirkungsweise der Klemmeinrichtung am Beispiel der Klemmeinrichtung 3o.

Die Klemmeinrichtung 3o umfasst eine aus zwei Gehäuseschalen zusammengesetzte Muffe 11. Durch die Verwendung von zwei Gehäuseschalen ist die Montage der Klemmeinrichtung erleichtert. Die Muffe 11 ist an dem unteren Endabschnitt des Teleskopelements 2a drehstarr befestigt. Das Teleskopelement 2b erstreckt sich durch die Muffe 11 axial verschieblich. Die Gehäuseschalen der Muffe 11 sind vorteilhafterweise aus thermoplastischem schlagzähem Kunststoff gebildet.

Bei der Klemmeinrichtung 3o handelt es sich um ein Reibrichtgesperre mit einem verkantbaren Sperrstück, das als ein Klemmring 12 ausgebildet ist, der das Teleskopelement 2b umgreift. Der im Wesentlichen trapezringförmige Klemmring 12 weist eine Innenkontur auf, die mit Übermaß zur Außenkontur des Teleskopelements 2b ausgebildet ist. Der Klemmring 12 kann beispielsweise aus einer Platte geeigneter Dicke hergestellt sein. Der Klemmring 12 weist zwei einander gegenüberstehende Klemmringfortsätze 12f auf (siehe Fig. 3), die an den geneigten Seiten des Klemmrings 12 angeordnet sind. Der eine Klemmringfortsatz 12f greift in einen in die Innenwand der Muffe 11 eingebrachten Querspalt 11 q ein und ist in diesem um eine sich quer zur Muffenlängsachse erstreckende Achse kippbar gelagert. Zwischen dem anderen Klemmringfortsatz 12f und einer in der Innenwand der Muffe 11 angeordneten Ausnehmung 13 ist eine Druckfeder 14 angeordnet, welche den Klemmring 12 in einer Sperrlage fixiert, in der er zu dem Teleskopelement 2b verkantet ist. Dadurch ist das Spiel zwischen der Innenkontur des Klemmrings 12 und der Außenkontur des Teleskopelements 2b beseitigt und ein Reibschluss zwischen dem Klemmring 12 und dem Teleskopelement 2b hergestellt. Wenn das Teleskopelement 2b aus dem Teleskopelement 2a herausgezogen wird, ist die Reibkraft so gerichtet, dass der Klemmring 12 soweit aus der Sperrlage geschwenkt wird, dass der Reibschluss zwischen dem Klemmring 12 und dem Teleskopelement 2b überwunden wird. Es ist also möglich, die Länge des Stativbeins durch Herausziehen des Teleskopelements 2b zu vergrößern, nicht jedoch das Teleskopelement 2b wieder in das Teleskopelement 2a hineinzuschieben.

Das Material des Klemmrings 12 ist vorteilhafterweise so gewählt, dass es aus einem Material geringerer Härte besteht als das Material der Teleskopelemente 2a bis 2c.

Zum Aufheben der Sperrlage des Klemmrings 12 ist eine die Wand der Muffe 11 durchgreifende Taste 16 vorgesehen, die an der Innenwand einen Fortsatz aufweist, der mit einer Wippe 15 zusammenwirkt. Die Taste 16 ist als eine um ein Drehlager 16l schwenkbare Kipptaste ausgebildet, die von einer Druckfeder 17 in eine Solllage gebracht ist, in der der von dem Drehlager abgewandte Endabschnitt der Taste 16 aus der Oberfläche der Muffe 11 herausragt. Die Druckfeder 17 zwischen einer im Innern der Muffe 11 angeordneten Federaufnahme 17a und einer in der Innenwand der Taste 16 angeordneten Federaufnahme angeordnet.

Die Wippe 15 weist einen ersten und einen zweiten Schenkel auf, die von einem Lagerzapfen 15z abstehen. Der Lagerzapfen 15z ist in der Innenwand der Muffe 11 gelagert. Die beiden Schenkel der Wippe 15 bilden einen Winkel, der vorzugsweise zwischen 100 ° bis 170 ° betragen kann. Der erste Schenkel der Wippe 15 wirkt mit der Taste 16 zusammen. Der zweite Schenkel der Wippe 15 wirkt mit dem Klemmring 12 zusammen, und zwar mit dem freien Klemmringfortsatz 12f, der dem in dem Querspalt 11q der Muffe 11 gelagerten Klemmringfortsatz 12f gegenüber steht. Sobald die Taste 16 betätigt wird, wird die Wippe 15 um die Achse des Lagerzapfens 15z gedreht und schwenkt den Klemmring 12 in eine Freigabelage, die in Fig. 2b dargestellt ist. Es kann vorgesehen sein, dass die beiden Schenkel der Wippe 15 ein Längenverhältnis von 3:1 bis 1:1 aufweisen, wobei der längere der beiden Schenkel der erste Schenkel ist.

In der in Fig. 2b dargestellten Freigabelage fluchtet die Längsachse des Klemmrings 12 mit der Längsachse 21 des Stativbeins 2. Das Spiel zwischen der Innenkontur des Klemmrings 12 und der Außenkontur des Teleskopelements 2b ermöglicht nun das freie Verschieben des Teleskopelements 2b sowohl in der Freigaberichtung als auch in der Sperrrichtung.

In dem in Fig. 2a und 2b dargestellten Ausführungsbeispiel weist die Taste 16 weiter eine U-förmig ausgebildete Ausnehmung 16a auf, die beim Betätigen der Taste 16 den Lagerzapfen 15 z übergreift (vergleiche Fig. 2a mit Fig. 2b).

Die untere Klemmeinrichtung 3u ist wie die obere Klemmeinrichtung 3o ausgebildet, wobei vorgesehen sein kann, dass mindestens einige der Abmessungen, insbesondere die Außenabmessungen der Muffe 11 verkleinert ausgebildet sind, wobei der Verkleinerungsmaßstab proportional zu dem Abmessungsverhältnis des Teleskopelements 2c zu dem Teleskopelement 2b gewählt sein kann.

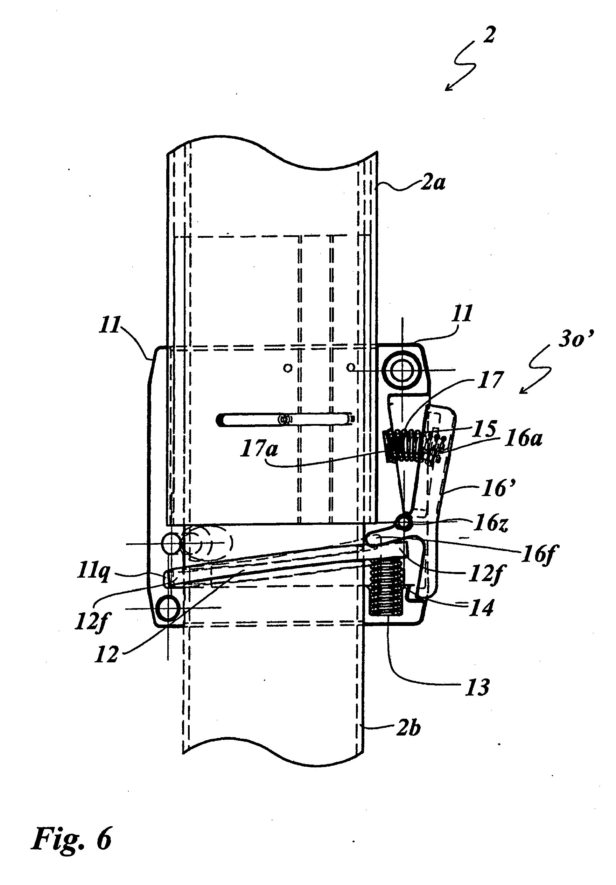

Fig. 6 zeigt ein nicht patentgemäßes Ausführungsbeispiel der Klemmeinrichtung. Eine Klemmeinrichtung 3o' unterscheidet sich von der in Fig. 2a im geklemmten Zustand dargestellten Klemmeinrichtung 3o dadurch, dass eine Taste 16' vorgesehen ist, in welche die Wippe 15 in Fig. 2a integriert ist. Die Taste 16' weist einen Schaltfortsatz 16f auf, der mit dem Klemmring 12 zusammenwirkt, und zwar mit dem freien Klemmringfortsatz 12f, der dem in dem Querspalt 11q der Muffe 11 gelagerten Klemmringfortsatz 12f gegenüber steht. Die Taste 16' ist wie die Wippe 15 in Fig. 2a gelagert, d. h. die Taste 16' weist einen Lagerzapfen 16z auf, der in der Innenwand der Muffe 11 gelagert sind. Sobald die Taste 16' betätigt wird, wird die Taste 16' um die Achse des Lagerzapfens 16z gedreht und schwenkt den Klemmring 12 in die Freigabelage.

### Bezugszeichenliste

- 1: Stativ
- 1g: Grundplatte
- 1 s: Stativschraube
- 2: Stativbein
- 2a, 2b, 2c: Teleskopelement
- 2l: Längsachse
- 3o, 3o': obere Klemmeinrichtung
- 3u: untere Klemmeinrichtung
- 11: Muffe
- 11q: Querspalt
- 12: Klemmring
- 12f: Klemmringfortsatz
- 13: Ausnehmung
- 14: Druckfeder
- 15: Wippe
- 15z: Lagerzapfen
- 16, 16': Taste
- 16a: Ausnehmung
- 16f: Schaltfortsatz
- 16z: Lagerzapfen
- 17: Druckfeder
- 17a: Federaufnahme

## Patentansprüche

1. Stützvorrichtung (1), umfassend mindestens ein teleskopierbar miteinander verbundenes, aus Außen- und Innenrohr (2a, 2b, 2c) bestehendes Stützbein (2) mit einer Klemmeinrichtung (3o, 3u), wobei die Klemmeinrichtung in einer Sperrrichtung eine Relativverschiebung zwischen Innenrohr und Außenrohr blockiert und in einer Freigaberichtung eine Relativverschiebung zwischen Innenrohr und Außenrohr ermöglicht, wobei die Klemmeinrichtung (3o, 3u) eine am einen Ende des Außenrohrs (2a, 2b), an dem das Innenrohr (2b, 2c) in das Außenrohr einschiebbar ist, befestigte Muffe (11) umfasst, durch die sich im montierten Zustand das Innenrohr (2b, 2c) axial verschieblich hindurcherstreckt, wobei die Muffe (11) einen von außen her betätigbaren Klemmring (12) aufweist, wobei der Klemmring innerhalb eines in der Muffe (11) ausgebildeten Querspaltes (11q) um eine sich quer zur Muffenlängsachse erstreckende Achse kippbar gehalten ist, und zwar zwischen einer sich senkrecht zur Muffenlängsachse (2l) erstreckenden Freigabelage, in welcher Innen- und Außenrohr in axialer Richtung relativ zueinander axial verschiebbar sind, und einer schrägen Klemmlage, in welcher Innen- und Außenrohr in Sperrrichtung relativ zueinander blockiert sind, wobei der Klemmring (12) durch ein erstes Rückstellelement in die Klemmlage gebracht ist, wobei durch eine an der Muffe beweglich befestigte Taste (16), die zu einer sich quer zur Muffertlärtgsachse erstreckende Achse kippbar gelagert ist, durch Drücken der Taste der Klemmring von der Klemmlage in die Freigabelage bringbar ist, in welcher das Innenrohr auch in der Sperrrichtung gegen das Außenrohr axial verschiebbar ist,
**dadurch gekennzeichnet,**
**dass** die Stützvorrichtung (1) ferner eine parallel zur Tastenachse kippbar gelagerte Wippe (15) mit zwei Schenkeln und einem Lagerpunkt umfasst, wobei die an der Muffe befestigte bewegliche Taste, die zu der sich quer zur Muffenlängsachse erstreckende Achse kippbar gelagert ist, so angeordnet ist, dass beim Drücken der Taste die Taste auf den ersten Schenkel der kippbar gelagerte Wippe (15) wirkt und mit dem zweiten Schenkel auf den Klemmring wirkt, wodurch der Klemmring von der Klemmlage in die Freigabelage bringbar ist.

2. Stützvorrichtung nach Anspruch 1, wobei ein zweites Rückstellelement auf die Taste wirkt.

3. Stützvorrichtung nach Anspruch 2, wobei das zweite Rückstellelement eine Feder (17) ist.

4. Stützvorrichtung nach einem der vorhergehenden Ansprüche, wobei das erste Rückstellelement eine Feder (14) ist.

5. Stützvorrichtung nach einem der vorhergehenden Ansprüche, wobei die beiden Schenkel der kippbar gelagerten Wippe (15) ein Längenverhältnis von 3:1 bis 1:1 aufweisen, wobei der längere Schenkel der erste Schenkel der Wippe ist.

6. Stützvorrichtung nach einem der vorhergehenden Ansprüche, wobei die beiden Schenkel der Wippe einen Winkel von 100 bis 170 ° einschließen.

7. Stützvorrichtung nach einem der vorhergehenden Ansprüche, wobei der Klemmring aus einem Material mit geringerer Härte besteht als das Innen- und Außenrohr.

8. Stützvorrichtung nach einem der vorhergehenden Ansprüche, wobei der Klemmring mindestens einen Klemmringfortsatz aufweist, wodurch der Klemmring gegen eine Rotation um die Muffenlängsachse fixierbar ist.

9. Stützvorrichtung nach einem der vorhergehenden Ansprüche, wobei die Muffe auf das Ende des Außenrohrs aufgeschrumpft ist.

10. Stützvorrichtung nach einem der vorhergehenden Ansprüche, wobei die Stützvorrichtung ein Stativ zur Aufnahme von Geräten, wie beispielsweise Photoapparaten, Filmkameras oder anderen optischen Geräten ist.

11. Stützvorrichtung nach einem der Ansprüche 1 bis 9, wobei die Stützvorrichtung eine Haltevorrichtung für ein Fenster ist.

## Claims

1. Support device (1) comprising at least one telescopic supporting leg (2), which are connected to one another, consisting of an outer and inner pipe (2a, 2b, 2c), having a clamping device (3o, 3u), wherein the clamping device blocks a relative displacement between the inner pipe and the outer pipe in a blocking device and enables a relative displacement between the inner pipe and the outer pipe in a releasing device, wherein the clamping device (3o, 3u) comprises a bushing (11) that is fastened to the end of the outer pipe (2a, 2b) on which the inner pipe (2b, 2c) can be inserted into the outer pipe, through which bushing the inner pipe (2b, 2c) extends with axial displacement when in the assembled state, wherein the bushing (11) has a clamp ring (12) that can be actuated from the outside, wherein the clamp ring (12) is held pivotably around an axis extending transversely to the longitudinal axis of the bushing within a transverse column (11q) formed in the bushing (11), and indeed between a release position, which extends perpendicularly to the longitudinal axis (21) of the bushing, in which the inner and outer pipe can be displaced in the axial direction relative to each other, and a slanted clamping position, in which the inner and outer pipe are blocked relative to each other in the blocking direction, wherein the clamp ring (12) is brought into the clamping position by a first resetting element, wherein, with a button (16) that is fastened moveably to the bushing, which is mounted pivotably with respect to an axis extending transversely to the longitudinal axis of the bushing, the clamp ring can be brought into the release position from the clamping position by pressing the button, in which release position the inner pipe can also be displaced axially against the outer pipe in the blocking position,
**characterised in that**,
the support device (1) furthermore comprises a rocker (15), having two blades and a bearing point, mounted pivotably parallel to the axis of the button, wherein the moveable button that is fastened to the bushing, which is mounted pivotably with respect to the axis extending transversely with respect to the longitudinal axis of the bushing, is arranged in such a way that, when the button is pressed, the button acts on the first blade of the pivotably mounted rocker (15) and acts on the clamp ring with the second blade, whereby the clamp ring can be brought into the release position from the clamping position.

2. Support device according to claim 1, wherein a second resetting element acts on the button.

3. Support device according to claim 2, wherein the second resetting element is a spring (17).

4. Support device according to one of the preceding claims, wherein the first resetting element is a spring (14).

5. Support device according to one of the preceding claims, wherein both blades of the pivotably mounted rocker (15) have a length ratio of 3:1 to 1:1, wherein the longer blade is the first blade of the rocker.

6. Support device according to one of the preceding claims, wherein both blades of the rocker include an angle of 100 to 170°.

7. Support device according to one of the preceding claims, wherein the clamp ring consists of a material that is less hard than the inner and outer pipe.

8. Support device according to one of the preceding claims, wherein the clamp ring has at least one clamp ring extension, whereby the clamp ring can be fixed to counter a rotation around the longitudinal axis of the bushing.

9. Support device according to one of the preceding claims, wherein the bushing is shrunk onto the end of the outer pipe.

10. Support device according to one of the preceding claims, wherein the support device is a stand for holding devices such as cameras, video cameras or other optical devices.

11. Support device according to one of claims 1 to 9,
wherein the support device is a holding device for a window.

## Revendications

1. Dispositif de support (1), comportant au moins un pied de support (2), formé d'un tube extérieur et d'un tube intérieur (2a, 2b, 2c), reliés entre eux de manière télescopique, et muni d'un dispositif de serrage (3o, 3u), ledit dispositif de serrage empêchant un mouvement relatif entre le tube intérieur et le tube extérieur dans une direction de blocage et autorisant un mouvement relatif entre le tube intérieur et le tube extérieur dans une direction de déblocage, ledit dispositif de serrage (3o, 3u) comportant un manchon (11), qui est fixé à une extrémité du tube extérieur (2a, 2b), au niveau de laquelle le tube intérieur (2b, 2c) peut être inséré dans le tube extérieur, et à travers lequel, dans la position montée, passe le tube intérieur (2b, 2c) de manière mobile axialement, ledit manchon (11) comportant une bague de serrage (12) actionnable de l'extérieur, ladite bague de serrage étant maintenue à l'intérieur d'une fente transversale (11q), réalisée dans le manchon (11), de manière à pouvoir basculer autour d'un axe orienté transversalement à l'axe longitudinal du manchon, à savoir entre une position de déblocage orientée perpendiculairement à l'axe longitudinal (2l) du manchon, dans laquelle le tube intérieur et le tube extérieur peuvent coulisser axialement l'un par rapport à l'autre, et une position de blocage inclinée, dans laquelle le tube intérieur et le tube extérieur sont bloqués l'un par rapport à l'autre dans la direction de blocage, ladite bague de serrage (12) étant amenée dans la position de serrage par un premier élément de rappel, une pression appliquée sur une touche (16), fixée de manière mobile sur le manchon et montée pivotante par rapport à un axe orienté transversalement à l'axe longitudinal du manchon, permettant d'amener ladite bague de serrage de la position de blocage dans la position de déblocage, dans laquelle le tube intérieur peut coulisser axialement contre le tube extérieur même dans la direction de blocage,
**caractérisé en ce que**
le dispositif de support (1) comporte, en outre, une bascule (15), montée de manière à pouvoir basculer parallèlement à l'axe de la touche et munie de deux branches et d'un point d'appui, ladite touche, qui est fixée de manière mobile sur le manchon et est montée de manière à pouvoir basculer par rapport à l'axe orienté transversalement à l'axe longitudinal du manchon, étant agencée de telle sorte que lorsqu'une pression est appliquée sur la touche, ladite touche agit sur la première branche de la bascule (15) montée de manière à pouvoir basculer et avec la deuxième branche agit sur la bague de serrage, moyennant quoi ladite bague de serrage peut être amenée de la position de blocage dans la position de déblocage.

2. Dispositif de support selon la revendication 1, dans lequel un deuxième élément de rappel agit sur la touche.

3. Dispositif de support selon la revendication 2, dans lequel le deuxième élément de rappel est un ressort (17).

4. Dispositif de support selon l'une quelconque des revendications précédentes, dans lequel le premier élément de rappel est un ressort (14).

5. Dispositif de support selon l'une quelconque des revendications précédentes, dans lequel les deux branches de la bascule (15) montée de manière à pouvoir basculer ont un rapport de longueur de 3:1 à 1:1, la branche la plus longue étant la première branche de ladite bascule.

6. Dispositif de support selon l'une quelconque des revendications précédentes, dans lequel les deux branches de la bascule forment entre elles un angle de 100 à 170°.

7. Dispositif de support selon l'une quelconque des revendications précédentes, dans lequel la bague de serrage est réalisée dans un matériau avec une dureté plus faible que celui du tube intérieur et du tube extérieur.

8. Dispositif de support selon l'une quelconque des revendications précédentes, dans lequel la bague de serrage comporte au moins une saillie, moyennant quoi la bague de serrage peut être immobilisée en rotation autour de l'axe longitudinal du manchon.

9. Dispositif de support selon l'une quelconque des revendications précédentes, dans lequel le manchon est emmanché sur l'extrémité du tube extérieur.

10. Dispositif de support selon l'une quelconque des revendications précédentes, dans lequel ledit dispositif de support est un trépied destiné à recevoir des appareils, tels que des appareils photographiques, des caméras ou d'autres appareils optiques.

11. Dispositif de support selon l'une quelconque des revendications 1 à 9, dans lequel ledit dispositif de support est un dispositif de retenue pour une fenêtre.
